# EUROPÄISCHE PATENTSCHRIFT

(11) **EP 3 342 134 B1**
(45) Veröffentlichungstag und Bekanntmachung des Hinweises auf die Patenterteilung: **12.06.2019**
(21) Anmeldenummer: 16731854.2
(22) Anmeldetag: 21.06.2016
(51) Int. Cl.: H04L 29/06, H04L 29/08, F03D 7/04

(54) **ÜBERTRAGUNG VON DATEN VON WINDENERGIEANLAGEN UND WINDPARKS AN EINE LEITZENTRALE**
TRANSMISSION OF DATA FROM WIND TURBINES AND WIND FARMS TO A CONTROL CENTER
TRANSMISSION DE DONNÉES D'ÉOLIENNES ET DE PARCS ÉOLIENS À UN CENTRE DE COMMANDE

(30) Priorität: 26.08.2015 DE 102015114174
(43) Veröffentlichungstag der Anmeldung: 04.07.2018
(73) Patentinhaber: Wobben Properties GmbH, 26607 Aurich (DE)
(72) Erfinder: DEMUTH, Simon, 26524 Hage (DE)
(74) Vertreter: Eisenführ Speiser
(86) Internationale Anmeldenummer: PCT/EP2016/064263
(87) Internationale Veröffentlichungsnummer: WO 2017/032478

(56) Entgegenhaltungen:
- US-A1- 2003 174 162

## Beschreibung

Die Erfindung betrifft Datenübertragungen zwischen Windenergieanlagen und/oder Windparks an eine Leitzentrale. Ferner betrifft die Erfindung eine Windenergieanlage oder einen Windpark sowie eine Leitzentrale und ein System aus mehreren Windenergieanlagen oder Windparks mit einer einzelnen Leitzentrale zur Durchführung des Verfahrens.

Windenergieanlagen weisen eine Vielzahl von Sensoren auf, die dienen, um die Steuerung oder Regelung der Windenergieanlagen während des Betriebs zu unterstützen. Ferner dienen diese Sensoren zur Aufzeichnung historischer Daten, die bei Wartungen oder während Serviceintervallen verwendet werden, um den Zustand der Windenergieanlagen bestimmen zu können. Zudem dienen die Sensordaten, um den aktuellen Betriebszustand einer Windenergieanlage darzustellen.

Die Sensoren erfassen neben den anlagenspezifischen Daten, wie Leistung und Statusdaten, auch Umweltdaten, wie zum Beispiel die Windgeschwindigkeit und Windrichtung, die einerseits zur Steuerung und zur Regelung der Windenergieanlage dienen, andererseits aber auch als Daten für Wetterdienste, zum Beispiel zur Aufzeichnung der Wetterhistorie oder zur Bestimmung der Wettervorhersage von Interesse sind.

Daher sind bereits einige Windenergieanlagen mit einer Fernabfragemöglichkeit ausgestattet, die es ermöglicht, die Daten, die von Sensoren der Windenergieanlage aufgenommen werden, zum Beispiel über eine Modemverbindung an einem entfernten Ort abzurufen. Außerdem sind Windenergieanlagen bekannt, bei denen mittels der Modemverbindung zu einem bestimmten Tageszeitpunkt ausgewählte Sensordaten an eine entfernte Stelle, zum Beispiel eines Betreibers, übertragen werden. Dieser bekommt somit einen Überblick über den Betriebsverlauf seiner Windenergieanlage.

Derartige Verfahren weisen jedoch den Nachteil auf, dass lediglich historische Daten, zum Beispiel vom Vortag übertragen werden und aktuelle Daten nicht unmittelbar ohne Weiteres verfügbar sind. Gerade aktuelle Daten sind jedoch für die Verwendung durch Servicepersonal, z.B. im Falle auftretender Messwerte, die von den Normalwerten abweichen, sehr wichtig, sodass z.B. sofort in den Betrieb der Windenergieanlage eingegriffen werden kann.

Im Übrigen sind auch aktuelle Sensordaten der Windenergieanlagen, wie z.B. die Wetterdaten hilfreich, um eine möglichst intelligente Steuerung des Netzes, also zum Beispiel der Erzeuger von elektrischer Energie im Netz, zu verwirklichen.

Sollen nun jedoch die Sensordaten aller Windenergieanlagen kontinuierlich ausgewertet werden, so würde dies zu einer Überlastung der Auswertenden Einrichtungen sowie der Datenleitungen führen, die nur eine begrenzte Bandbreite zur Verfügung stellen. In US 2003/0174162 A1 wird ein System und ein Verfahren dafür offenbart, bei dem Komponenten über ein Netzwerk auf vorbestimmte Weise miteinander kommunizieren, um ebenfalls eine begrenzte Bandbreite des Netzwerks nicht zu überschreiten.

Aufgabe der vorliegenden Erfindung ist es also, die Daten von Sensoren einer Vielzahl von Windenergieanlagen und/oder Windparks für die weitere Verwendung zur Verfügung zu stellen. Es ist weitere Aufgabe, möglichst aktuelle Daten von den Windenergieanlagen zu empfangen und hierbei zu berücksichtigen, dass aufgrund der Menge der Daten die zur Verfügung gestellte Bandbreite von Übertragungsleitungen nicht überschritten wird.

Das deutsche Patent- und Markenamt hat in der Prioritätsanmeldung zu vorliegender Anmeldungen den folgenden Stand der Technik recherchiert: US 2009/0010233 A1, US 8,568,099 B2, Padhye, Jitendra: "A TCP-friendly rate adjustment protocol for continuous media flows over best effort networks" und Padhye, Jitendra: "A TCP-Friendly Rate Adjustment Protocol for Continuous Media Flows over Best Effort Networks CMPSCI Technical Report TR 98-047".

Die Erfindung umfasst daher ein im Anspruch 1 definiertes Verfahren zum Übertragen von Datensätzen mehrerer Windenergieanlagen und/oder mehrerer Windparks an eine Leitzentrale, sowie eine im Anspruch 11 definierte Leitzentrale und ein im Anspruch 12 definiertes System.

Zunächst wird eine Mitteilung über das Vorhandensein eines aktualisierten Datensatzes von einer der Windenergieanlage oder einem der Windparks an die Leitzentrale gesendet. Es wird dann von der Leitzentrale entschieden, ob der aktualisierte Datensatz angefordert werden soll. Im Falle, dass der aktualisierte Datensatz angefordert werden soll, wird eine Anforderung des aktualisierten Datensatzes von der Leitzentrale an die Windenergieanlage oder den Wind park gesendet, die bzw. der zuvor die Mitteilung über den aktualisierten Datensatz an die Leitzentrale gesendet hat. Die Anforderung wird daraufhin von der Windenergieanlage empfangen und eine Antwort mit dem aktualisierten Datensatz an die Leitzentrale gesendet.

Die Leitzentrale sammelt somit alle Sensordaten der angeschlossenen Windenergieanlagen, auf die dann Benutzer, Servicepersonal oder andere berechtigte Personen, z.B. durch Einwahl mit einem PC über das Internet, zugreifen können.

Eine Leitzentrale, die auch Leitwarte oder Messwarte genannt werden kann, ist eine technische Einrichtung, insbesondere ein Rechner, zum Abrufen und Sammeln der Messwerte oder Datensätze. Die Leitzentrale oder Leitwarte ist eingerichtet, die Messwerte oder Datensätze zu speichern, zu verarbeiten oder weiterzuleiten. Ferner bietet die Leitwarte Schnittstellen, um die Messwerte oder verarbeiteten Messwerte anzuzeigen oder abrufen zu können. Zur Anzeige und zum Abrufen der Messwerte oder Datensätze können weitere Endgeräte mit der Leitzentrale über Datenleitungen verbunden werden.

Demnach wird also jedes Mal, wenn ein aktualisierter Datensatz einer Windenergieanlage oder eines Windparks zur Verfügung steht, eine Mitteilung an die Leitzentrale gesendet, um die Leitzentrale über das Vorhandensein dieses aktualisierten Datensatzes zu informieren.

Ein Datensatz umfasst insbesondere einen einzelnen Messwert eines Sensors einer Windenergieanlage oder eines Windparks, mehrere Messwerte von mehreren Sensoren einer Windenergieanlage oder eines Windparks oder auch mehrere Messwerte von mehreren Sensoren mehrerer Windenergieanlagen eines Windparks. Ein Datensatz eines Windparks umfasst demnach zum Beispiel mehrere Temperaturwerte, die im Bereich der Generatoren aller Windenergieanlagen eines Windparks gemessen werden.

Somit wird zum Beispiel, wenn ein Datensatz nur einen einzelnen Messwert umfasst, und ein Sensor einen neuen Messwert meldet, eine Mitteilung über einen aktualisierten Datensatz an die Leitzentrale abgesendet. Im Falle, dass mehrere Messwerte in einem Datensatz zusammengefasst sind, wird die Mitteilung über einen aktualisierten Datensatz z.B. erst dann abgesendet, wenn alle Sensoren neue Messwerte für diesen Datensatz gemeldet haben oder zumindest eine vorbestimmte Anzahl neuer Messwerte des Datensatzes vorliegen. Es ist jedoch auch möglich, dass im Falle, dass mehrere Messwerte in einem Datensatz zusammengefasst sind und nur ein einzelner neuer Messwert von einem Sensor für den Datensatz gemeldet wird, bereits eine Mitteilung über einen aktualisierten Datensatz abgesendet wird.

Diese Mitteilung über einen aktualisierten Datensatz entspricht demnach nur einem Hinweis, dass aktualisierte Daten zur Verfügung stehen. Messdaten oder Sensordaten selbst werden mit dieser Mitteilung noch nicht übersendet. Im Wesentlichen enthält die Mitteilung daher nur Informationen darüber, von welcher Windenergieanlage oder von welchem Windpark ein aktualisierter Datensatze vorliegt und welche Messdaten der Datensatz enthält.

Im nächsten Schritt entscheidet die Leitzentrale dann, ob der aktualisierte Datensatz, der nun von einer bestimmten Windenergieanlage oder von einem Windpark zur Verfügung steht, zum aktuellen Zeitpunkt angefordert werden soll. Entscheidet die Leitzentrale, dass der aktualisierte Datensatz angefordert werden soll, so sendet die Leitzentrale eine Anforderung dieses Datensatzes an die entsprechende Windenergieanlage oder den entsprechenden Windpark.

Mit diesem Verfahren ist es der Leitzentrale somit möglich, aktualisierte Messwerte einer Windenergieanlage oder eines Windparks, unmittelbar nachdem sie zur Verfügung stehen, für die weitere Verwendung anzufordern. Gleichzeitig kann die Leitzentrale jedoch entscheiden, ob diese Daten überhaupt zum jetzigen Zeitpunkt benötigt werden, oder ob eine Anforderung der Daten lediglich eine überflüssige Belastung der Datenleitungen darstellt und daher zu einer Limitierung der Bandbreite für Daten mit höherer Priorität führen würde.

Gemäß der Erfindung wird beim Entscheiden in der Leitzentrale, ob das aktualisierte Datenpaket angefordert werden soll, geprüft, ob ein Zeitintervall, das der Windenergieanlage oder dem Windpark zugeordnet ist, von dem die Mitteilung über einen aktualisierten Datensatz stammt, seit dem letzten Absenden einer Anforderung eines aktualisierten Datensatzes oder seit dem Empfangen der letzten Antwort mit einem Datensatz von dieser Windenergieanlage oder diesem Windpark abgelaufen ist.

Ist das Zeitintervall abgelaufen, wird der aktualisierte Datensatz durch Absenden der Anforderung angefordert. Im Fall, dass das Zeitintervall noch nicht abgelaufen ist, wird die Mitteilung über den aktualisierten Datensatz ignoriert.

Demnach ist also in der Leitzentrale für jede Windenergieanlage und/oder jeden Windpark, der mittels Datenverbindung mit der Leitzentrale verbindbar ist, ein Zeitintervall hinterlegt. Dieses Zeitintervall dient demnach vorteilhafterweise, um eine Entscheidung der Leitzentrale treffen zu können, ob die aktualisierten Daten angefordert werden sollen oder nicht.

Es wird daher gewährleistet, dass auch im Falle, dass aktualisierte Messwerte einer Windenergieanlage oder eines Windparks sehr häufig oder in großer Anzahl zur Verfügung stehen, diese Messwerte nur Datensatzweise mit einer maximalen Frequenz abgerufen werden, die sich aus dem Zeitintervall der Windenergieanlage oder des Windparks ergibt.

Gemäß einer Ausführungsform ist jeder Windenergieanlage und/oder jedem Windpark, der mittels Datenverbindung verbindbar ist, ein Zeitintervall zugeordnet. Dieses Zeitintervall ist gemäß dieser Ausführungsform variabel. Durch ein variables Zeitintervall ist ein Instrument geschaffen, um ein Priorisieren der aktualisierten Datensätze verschiedener Windenergieanlagen oder Windparks zu ermöglichen.

Gemäß einer weiteren Ausführungsform erfolgt eine Anpassung jedes Zeitintervalls, also der Dauer des Zeitintervalls, automatisch durch die Leitzentrale und/oder es wird das Zeitintervall manuell angepasst.

Das Zeitintervall kann demnach automatisch angepasst werden, wobei in der Leitzentrale hierzu verschiedenste Programmabläufe oder Mechanismen berücksichtigt werden können. Außerdem kann ein Benutzer zusätzlich manuell auf die Zeitintervalle und damit das Priorisieren eingreifen.

Gemäß einer weiteren Ausführungsform umfasst das Zeitintervall einer Windenergieanlage oder eines Windparks in einem Standartbetrieb, der auch Leerlaufbetrieb genannt werden kann, eine Standarddauer. Diese Standarddauer wird dadurch verkürzt, dass von dem Standardbetrieb in einen Zugriffsbetrieb gewechselt wird, wenn ein Benutzer Daten von der Windenergieanlage oder dem Windpark anfordert. Hierbei wird das Zeitintervall durch das Anfordern von Daten durch einen Benutzer zum Beispiel auf einen vordefinierten minimalen Wert, also eine minimale Zeitdauer, verkürzt.

Einem Benutzer stehen somit beim Zugriff auf eine Windenergieanlage bereits die Daten zur Verfügung, die bei der oder den letzten Aktualisierungen an die Leitzentrale übersendet wurden. Durch Verkürzen des Zeitintervalls wird der Benutzer vom Zeitpunkt des Zugriffs an jedoch ständig oder zumindest möglichst zeitnah über aktualisierte Daten der interessierenden Windenergieanlage oder den interessierenden Windpark informiert.

Gemäß einer weiteren Ausführungsform erfolgt das Absenden einer Mitteilung über einen aktualisierten Datensatz sowie das Absenden einer Antwort mit dem aktualisierten Datensatz mittels einem Computer, der jeweils einer Windenergieanlage oder einem Windpark zugeordnet oder Bestandteil davon ist. Dieser Computer ist insbesondere auch Bestandteil eines Supervisory Control and Data Acquisition-Systems, das kurz SCADA-System genannt wird.

Demnach ist also ein Computer für eine oder mehrere Windenergieanlagen vorgesehen, der zum Beispiel über ein Bussystem mit der oder den Windenergieanlagen verbunden ist. Mittels der Verbindung zwischen Windenergieanlage bzw. Windenergieanlagen und Computer werden demnach die Sensordaten der Windenergieanlagen oder der Windenergieanlagen an den Computer der Windenergieanlage oder der Windenergieanlagen eines Windparks übermittelt. Der Computer ist somit Bestandteil einer Windenergieanlage oder eines Windparks.

Der Computer ist zudem eingerichtet, um zu erkennen, wann neue Messdaten oder Sensordaten vorliegen, die sich zum Beispiel von den vorherigen Werten unterscheiden. Der Computer der Windenergieanlage oder des Windparks sendet dann die Mitteilung über einen aktualisierten Datensatz mittels einer Datenverbindung, die zum Beispiel eine die TCP/IP-Verbindung ist, an die Leitzentrale.

Gemäß einer weiteren Ausführungsform bearbeitet der Computer eingehende Anfragen von der Leitzentrale seriell, also in der Reihenfolge ihres Eingangs. Diese Abarbeitung wird auch durch "FIFO" nämlich "first in first out" bezeichnet. Ferner wird gemäß dieser Ausführungsform die Umlaufzeit oder die Signallaufzeit zwischen der Leitzentrale und jedem der Computer der Windenergieanlagen und/oder Windparks bestimmt.

Hierzu werden mit einer vordefinierten Frequenz für jeden Computer jeweils wiederholte Durchläufe zur Bestimmung der Umlaufzeit oder des Signallaufs bzw. der Signallaufzeit in der Leitzentrale ausgeführt. In jedem Durchlauf wird ein vordefiniertes Datenpaket von der Leitzentrale an den entsprechenden Computer gesendet, wobei der Computer das Datenpaket - aufgrund der seriellen Abarbeitung von Anfragen - bearbeitet, nachdem zuvor empfangene Datenpakete bearbeitet wurden.

Nach der Bearbeitung oder auch bei der Bearbeitung des vordefinierten Datenpakets zur Bestimmung der Umlaufzeit oder Signallaufzeit sendet der Computer dann eine Antwort an die Leitzentrale. Daraufhin wird in der Leitzentrale die Zeitdauer zwischen dem Versenden des Datenpakets und dem Empfangen der Antwort auf das Datenpaket bestimmt und die Dauer des Zeitintervalls in Abhängigkeit der gemessenen Zeitdauer angepasst, also unverändert gelassen, verkürzt oder verlängert.

Demnach werden einerseits die Qualität der Verbindungsleitungen zwischen der Leitzentrale und einem Computer und andererseits die Auslastung des Computers selbst bestimmt. In Abhängigkeit dieser beiden Faktoren wird dann das Zeitintervall angepasst, sodass wiederum weder die Bandbreite der Datenverbindung noch die Rechnerkapazität des Computers überbeansprucht wird.

Es wird durch die zuletzt genannte Ausführungsform vermieden, dass immer weiter Daten von einem Computer einer Windenergieanlage oder eines Windparks angefordert werden, obwohl zuvor abgesendete Anfragen noch gar nicht beantwortet sind. Ein Aufstauen unbeantworteter Anfragen würde nämlich dazu führen, dass die Aktualität der an die Leitzentrale übermittelten Daten ab einer bestimmten Überforderung nicht mehr gegeben ist.

Gemäß einer weiteren Ausführungsform wird in der Leitzentrale zur Anpassung des Zeitintervalls einer der Windenergieanlagen oder eines der Windparks die Differenz der an diese Windenergieanlage oder diesen Windpark, insbesondere den Computer der Windenergieanlage oder des Windparks, abgesendeten Anforderungen und die Anzahl der von den Windenergieanlagen oder dem Windpark empfangenen Antworten bestimmt. Diese Differenz entspricht damit den noch nicht beantworteten angeforderten aktualisierten Datensätzen. Auf Grundlage dieser Differenz wird dann das Zeitintervall angepasst, also unverändert gelassen, verkürzt oder verlängert.

Es wird somit alternativ oder zusätzlich zur in der vorherigen Ausführungsform beschriebenen Bestimmung der Umlaufzeit oder Signallaufzeit die Reaktionsgeschwindigkeit auf angeforderte Daten bestimmt. Demnach ist auch durch die in der letzten Ausführungsform genannte Methode eine Auslastung der Computer sowie der Verbindungsleitungen zwischen den Computern und der Leitzentrale berücksichtigbar, sodass einer Überlastung entgegengewirkt werden kann, indem das Zeitintervall verlängert wird, und durch verkürzen der Zeitintervalle wiederum möglichst aktuelle in der Leitzentrale vorliegen Daten gewährleistet werden.

Gemäß einer weiteren Ausführungsform werden für jeden Computer jeweils wiederholte Durchläufe zur Bestimmung der Differenzen in der Leitzentrale wiederholt. Ein derartiger Durchlauf zum Bestimmen der Differenzen wird für die Windenergieanlagen oder Windparks jeweils entweder jedes Mal beim Empfangen einer Mitteilung über einen aktualisierten Datensatz oder mit einer vordefinierten Frequenz wiederholt durchgeführt. Somit erfolgt eine regelmäßige Anpassung des Zeitintervalls.

Gemäß einer weiteren Ausführungsform wird in jedem Durchlauf, in dem die Differenz für eine der Windenergieanlagen oder für einen der Windparks bestimmt wird, die Zeitdauer der Windenergieanlage oder des Windparks an die ermittelte Differenz angepasst. Hierzu wird die Differenz, nachdem sie bestimmt wurde, mit einem oberen und mit einem unteren Schwellenwert verglichen. Beim Erreichen oder Überschreiten des oberen Schwellenwerts wird das Zeitintervall um eine vordefinierte Schrittweite verlängert und beim Erreichen oder Unterschreiten des unteren Schwellenwerts wird das Zeitintervall um eine vordefinierte Schrittweite verkürzt. Eine stufenweise Anpassung des Zeitintervalls ist somit möglich.

Gemäß einer weiteren Ausführungsform wird zusätzlich in jedem Durchlauf, bei dem die Differenz bestimmt wird, geprüft, ob das Zeitintervall einem vordefinierten maximalen Wert, also einer maximalen Zeitdauer, entspricht oder diesen sogar überschreitet. Im Falle, dass der maximale Wert erreicht oder überschritten wird, wird eine Warnmeldung von der Leitzentrale ausgegeben. Diese Warnmeldung wird zum Beispiel direkt an Servicepersonal ausgegeben, das aufgrund der Warnmeldung eine Überprüfung der Datenleitung zur Windenergieanlage oder zum Windpark und/oder des Computers der Windenergieanlage oder des Windparks durchführen kann.

Weitere Ausführungsformen ergeben sich anhand der Zeichnungen näher erläuterten Ausführungsbeispielen. In den Zeichnungen zeigen:
- Fig. 1: eine Windenergieanlage,
- Fig. 2: einen Windpark mit einem Computer, der mit einer Leitzentrale verbunden ist,
- Fig. 3: ein schematisches Ablaufdiagramm eines Ausführungsbeispiels des Verfahrens zum Übertragen und
- Fig.4: einen Ablauf eines Ausführungsbeispiels zur Anpassung von Zeitintervallen.

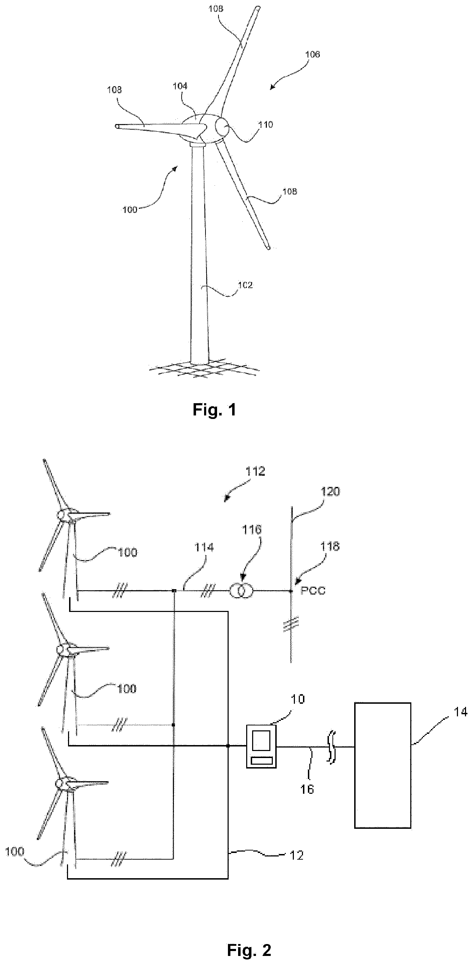

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

Ferner zeigt Fig. 2 einen Computer 10, der auch als SCADA-Computer oder SCADA-Rechner bezeichnet wird und über ein Bussystem 12 mit jeder einzelnen Windenergieanlage 100 verbunden ist. Außerdem weist Fig. 2 eine Leitzentrale 14 auf, wobei die Leitzentrale 14 und der Computer 10 über eine Verbindung 16 miteinander verbunden sind. Die Verbindung 16 entspricht zum Beispiel einer TCP/IP-Verbindung.

In Fig. 2 ist mit der Leitzentrale 14 exemplarisch nur ein einzelner Windpark 112 verbunden. Tatsächlich sind mit der Leitzentrale 14 mehrere Windparks 112 mit jeweils mehreren Windenergieanlagen 100 verbunden. Ferner sind in Fig. 2 drei Windenergieanlagen 100 dargestellt, die mit einem Computer 10 verbunden sind. Es sind neben dem Windpark 112 auch einzelne Windenergieanlagen 100 denkbar, die jeweils einen eigenen Computer 10 aufweisen, der über eine Verbindung 16 wiederum mit der Leitzentrale 14 verbunden ist. Die Verbindung 16 zwischen dem Computer 10 und der Leitzentrale 14 ist hier im Verhältnis sehr kurz dargestellt, kann tatsächlich aber mehrere hundert oder sogar tausend Kilometer lang sein.

Ferner ist die Verbindung 16 als direkte Verbindung zwischen dem Computer 10 und der Leitzentrale 14 eingezeichnet, wobei natürlich eine Vielzahl weiterer elektronischer Bauteile aus dem Bereich der Nachrichtenübertragung oder Datenübertragung in einer realen Übertragungsleitung zwischengeschaltet sind. Die Verbindung 16 ist hier als Leitung dargestellt, wobei auch diese Darstellung exemplarisch ist und eine Verbindung 16 auch Funkstrecken umfassen kann.

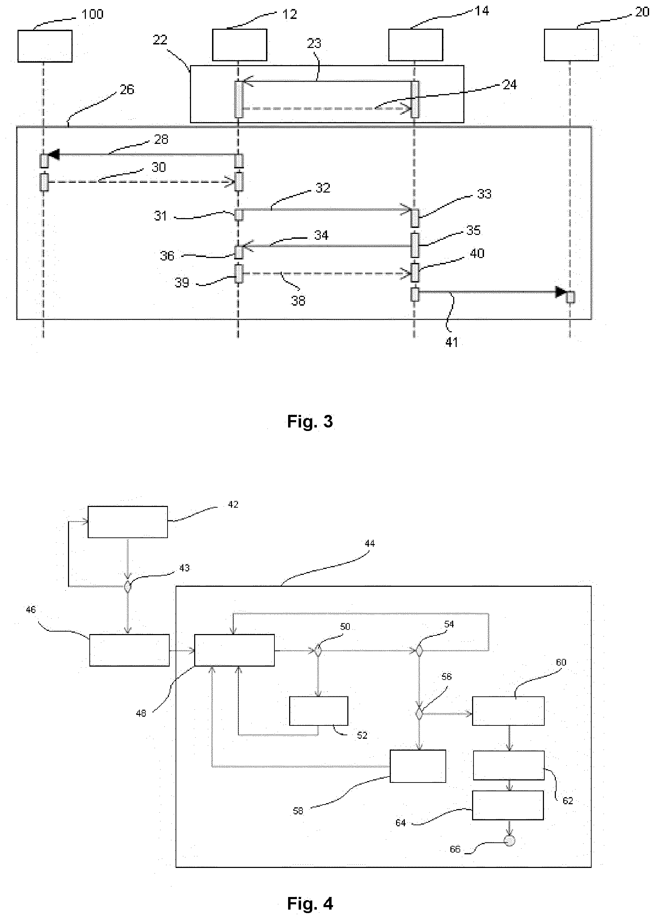

Fig. 3 zeigt ein Ausführungsbeispiel einer Übertragung von Daten zwischen einer Windenergieanlage 100 bis hin zu einem elektronischen Gerät 20 eines Benutzers, mit dem sich der Benutzer, zum Beispiel eine mit der Wartung beauftragte Person, die Sensordaten darstellen lassen kann.

Zwischen den nicht dargestellten Sensoren der Windenergieanlage 100 und dem elektronischen Gerät 20 ist ein Computer 12 der Windenergieanlage 100 angeordnet, der im Bereich der Windenergieanlage, also entweder direkt im Turm der Windenergieanlage 100 oder im Umkreis von einigen Metern bis hin zu einigen Kilometern um die Windenergieanlage 100, z. B. in einem Parkknotenpunkt, angeordnet ist. Der Computer 12 ist mit der Leitzentrale 14 verbunden, die wiederum mit dem elektronischen Gerät 20 verbunden ist.

In einem Anmeldeschritt 22 meldet sich die Leitzentrale bei dem Computer 12 der Windenergieanlage 100 an. Im Falle, dass Anmeldedaten 23 im Computer 12 verifiziert werden konnten, erfolgt eine Bestätigung 24 der Anmeldung an die Leitzentrale 14.

Nun ist eine Datenverbindung zwischen dem Computer und der Leitzentrale eingerichtet, die fortlaufend innerhalb einer Schleife 26 aufrecht gehalten wird. Innerhalb dieser Schleife 26 fordert 28 der Computer 12 kontinuierlich, z.B. mit einer vordefinierten Frequenz getaktet, von der Windenergieanlage 100 neue Sensordaten an. Daraufhin sendet die Windenergieanlage 100 die angeforderten Daten 30 an den Computer 12. Der Computer 12 meldet im Falle, dass diese Daten der Windenergieanlage 100 von den vorherigen empfangenen Daten des gleichen Sensors abweichen, durch Absenden 31 einer Mitteilung 32 an die Leitzentrale 14, dass ein aktualisierter Datensatz von der Windenergieanlage 100 vorliegt.

Diese Mitteilung 32 wird an die Leitzentrale 14 gesendet 31 und von dieser empfangen 33. Die Leitzentrale 14 entscheidet dann, ob der aktualisierte Datensatz angefordert werden soll. Im Falle, dass die der Datensatz angefordert werden soll, wird eine Anforderung 34 an den Computer 12 von der Leitzentrale 14 abgesendet 35 und nach dem Empfangen 36 der Anforderung 34 eine Antwort 38 mit dem aktualisierten Datensatz von dem Computer 12 der Windenergieanlage 100 an die Leitzentrale 14 abgesendet 39. Der aktualisierte Datensatz wird dann von der Leitzentrale 14 empfangen 40 und kann nun an ein elektronisches Gerät 20 durch eine weitere Mitteilung 41 weitergeleitet werden.

Jedes Mal, wenn der Computer 12 neue Daten 30 von der Windenergieanlage erhält, erfolgt demnach ein Absenden 31 einer Mitteilung 32 über einen aktualisierten Datensatz. Die weiteren in Fig. 3 dargestellten Schritte beziehungsweise Datenübertragungsschritte 31 bis 35 erfolgen jedoch nur, wenn die Leitzentrale entscheidet, dass der aktualisierte Datensatz angefordert werden soll.

Um nun die Entscheidung in der Leitzentrale 14 zu treffen, ob die aktualisierten Daten angefordert werden sollen oder ob diese nicht angefordert werden sollen, wird für jede Windenergieanlage 100 oder jeden Windpark 112 ein Zeitintervall vordefiniert. In der Leitzentrale wird mit dem Zeitintervall beim Empfangen 33 der Mitteilung 32 über einen aktualisierten Datensatz geprüft, ob das Zeitintervall seit dem letzten Empfangen 40 eines aktualisierten Datensatzes bereits das Zeitintervall abgelaufen ist. Ist das Zeitintervall abgelaufen, so wird der neue aktualisierte Datensatz angefordert 35 und anderenfalls die Mitteilung 32 über einen aktualisierten Datensatz ignoriert.

Das Zeitintervall für jede Windenergieanlage 100 oder jeden Windpark 112 wird in der Leitzentrale 14, wie es im Folgenden in Fig. 4 gezeigt wird, variiert.

In Fig. 4 wird nun ein Variieren oder Anpassen des Zeitintervalls einer Windenergieanlage dargestellt. Wie bereits ausgeführt, dient das Zeitintervall, das angepasst wird, der Leitzentrale 14 zur Entscheidung, ob aktualisierte Daten von der Windenergieanlage 100 oder dem Windpark 112, dem das Zeitintervall zugeordnet ist, angefordert werden sollen.

Das Zeitintervall ist im Zustand 42 so gewählt, dass es einer vordefinierten Standarddauer entspricht. Diese Standarddauer des Zeitintervalls wird solange beibehalten, bis in einem Schritt 43 ein Zugriff auf die Daten der Windenergieanlage 100 oder den Windpark 112, dem das hier betrachtete Zeitintervall zugeordnet ist, z.B. durch einen Benutz, angefordert wird.

Im Falle, dass Daten angefordert werden, wird eine Schleife 44 solange, z.B. mit einer vordefinierten Frequenz durchlaufen, bis kein Zugriff mehr gewünscht ist. Dann wird wieder der Standartzustand 42 mit der Standartzeitdauer oder Standartdauer gewählt.

Bevor die Schleife 44 das erste Mal ausgeführt wird, wird das Zeitintervall auf einen minimalen Wert in einem Schritt 46 gesetzt. Im nächsten Schritt 48, dem ersten Schritt der Schleife 44, wird dann die Differenz zwischen den zurzeit an den Computer 12 der Windenergieanlage 100 oder den Windpark 112 abgesendeten Anforderungen 34 sowie den empfangenen Antworten 38 auf diese Anforderungen 34 bestimmt. Es wird also die Anzahl noch nicht beantworteter Anforderungen 34 bestimmt, die dieser Differenz entsprechen.

Die Differenz wird dann zunächst mit einem unteren Schwellenwert verglichen 50 und im Falle, dass der untere Schwellenwert unterschritten wird, wird in einem Schritt 52 das Zeitintervall verkürzt. Daraufhin wird im Schritt 48 die Differenz erneut bestimmt. Die Differenz wird solange im Schritt 52 verringert, wie der untere Schwellenwert unterschritten wird. Wird der untere Schwellenwert nicht mehr unterschritten, so wird die Differenz mit einem oberen Schwellenwert verglichen 54 und im Falle, dass dieser obere Schwellenwert nicht überschritten wird, die Differenz erneut bestimmt und die Vergleiche 50 sowie 54 erneut durchgeführt.

Erfolgt beim Vergleich 54 der Differenz mit dem oberen Schwellenwert, dass der obere Schwellenwert überschritten wird, so wird in einem Schritt 56 überprüft, ob die Intervalldauer einen Maximalwert erreicht oder überschritten hat. Ist der Maximalwert nicht überschritten, wird wieder im Schritt 48 die Differenz erneut bestimmt.

Im Falle, dass eine maximale Zeitintervalldauer, also eine maximale Dauer des Zeitintervalls, erreicht ist, wird eine Warnung versendet 60. Nach Versenden 60 der Warnung wird dann zum Beispiel die Verbindung zur Windenergieanlage, also zum Computer 12 der Windenergieanlage 100, komplett getrennt 62 und erneut aufgebaut 64 und im Falle, dass ein neuer Verbindungsaufbau nicht möglich ist, die Verbindung komplett beendet 66.

Die Erfindung ermöglicht somit die übertragene Datenmenge zwischen Computern 12 und der Leitzentrale 14 so zu steuern, dass eine Überlastung der Datenleitungen vermieden wird.

## Patentansprüche

1. Verfahren zum Übertragen von Datensätzen mehrerer Windenergieanlagen (100) und/oder mehrerer Windparks (112) an eine Leitzentrale (14), wobei das Verfahren die folgenden Schritte umfasst:
- Absenden (31) einer Mitteilung (32) über einen aktualisierten Datensatz von einer der Windenergieanlagen (100) oder einem der Windparks (112) an die Leitzentrale (14),
- Entscheiden durch die Leitzentrale (14), ob der aktualisierte Datensatz angefordert werden soll und im Falle, dass der aktualisierte Datensatz angefordert werden soll:
- Absenden (35) einer Anforderung (34) des aktualisierten Datensatzes der Windenergieanlage (100) oder des Windparks (112) von der Leitzentrale (14),
- Empfangen (36) der Anforderung (34) von der Windenergieanlage (100) oder dem Windpark (112) und
- Absenden (39) einer Antwort (38) mit dem aktuellen Datensatz von der Windenergieanlage (100) oder dem Windpark (112) an die Leitzentrale (14),
wobei zur Entscheidung der Leitzentrale (14), ob der aktualisierte Datensatz angefordert werden soll, geprüft wird, ob ein der Windenergieanlage (100) oder dem Windpark (112) zugeordnetes Zeitintervall seit dem letzten Absenden (35) einer Anforderung (34) oder Empfangen (40) der letzten Antwort (38) mit dem letzten Datensatz abgelaufen ist, wobei
- im Falle, dass das Zeitintervall abgelaufen ist, die Anforderung (34) zum Anfordern des aktualisierten Datensatzes abgesendet wird und
- im Falle, dass das Zeitintervall noch nicht abgelaufen ist, die Mitteilung (32) über einen aktualisierten Datensatz ignoriert wird.

2. Verfahren nach Anspruch 1, wobei jeder Windenergieanlage (100) und/oder jedem Windpark (112), der mit der Leitzentrale (14) mittels Verbindung (16) verbindbar ist, ein Zeitintervall zugeordnet wird, wobei das Zeitintervall variabel ist.

3. Verfahren nach Anspruch 1 oder 2, wobei eine Anpassung der Dauer jedes Zeitintervalls automatisch durch die Leitzentrale (14) erfolgt oder das Zeitintervall manuell angepasst wird.

4. Verfahren nach Anspruch 3, wobei das Zeitintervall einer Windenergieanlage (100) oder eines Windparks (112) in einem Standartzustand (42) eine Standarddauer umfasst und das Zeitintervall durch Anfordern (43) mindestens eines Datensatzes von der Windenergieanlage (100) oder dem Windparks (112) durch einen Benutzer verkürzt oder auf einen vordefinierten minimalen Wert, also eine minimale Zeitdauer, angepasst (46) wird.

5. Verfahren nach einem der vorhergehenden Ansprüche, wobei das Absenden (31) einer Mitteilung (32) über einen aktualisierten Datensatz und das Absenden (39) einer Antwort (38) mittels einem jeweils einer Windenergieanlage (100) oder jeweils einem Windpark (112) zugeordneten Computer (10), insbesondere einem Computer eines Supervisory Control and Data Acquisition-Systems, nämlich eines SCADA-Systems, erfolgt.

6. Verfahren nach Anspruch 5, wobei der Computer (10) eingehende Anfragen seriell bearbeitet und in der Leitzentrale (14) Durchläufe zur Bestimmung der Umlaufzeit oder Signallaufzeit ausgeführt werden, wobei die Durchläufe mit einer vordefinierten Frequenz wiederholt werden und die Umlaufzeit oder Signallaufzeit zwischen der Leitzentrale (14) und dem Computer (10) von der Leitzentrale (14) in jedem Durchlauf bestimmt wird, indem:
- ein vordefiniertes Datenpaket zur Bestimmung der Umlaufzeit oder Signallaufzeit von der Leitzentrale (14) an einen der Computer (10) gesendet wird, wobei
- der Computer (10) das Datenpaket bearbeitet, nachdem zuvor empfangene Datenpakete bearbeitet wurden und der Computer (10) bei oder nach der Bearbeitung eine Antwort an die Leitzentrale (14) absendet,
- die Leitzentrale (14) die Zeitdauer zwischen dem Versenden des Datenpakets und dem Empfangen der Antwort bestimmt und
- die Dauer des Zeitintervalls in Abhängigkeit der gemessenen Zeitdauer in jedem Durchlauf angepasst, also unverändert gelassen, verkürzt oder verlängert wird.

7. Verfahren nach einem der vorhergehenden Ansprüche, wobei die Leitzentrale (14) zur Anpassung des Zeitintervalls, die einer Windenergieanlage (100) oder einem Windpark (112) zugeordnet ist, die Differenz der abgesendeten Anforderungen (34) und die Anzahl der empfangenen Antworten (38) und somit also die Anzahl der noch nicht empfangenen Antworten bestimmt (48), und in Abhängigkeit dieser Differenz das Zeitintervall angepasst, also unverändert gelassen, verkürzt oder verlängert wird.

8. Verfahren nach Anspruch 7, wobei die Differenz jeweils in Durchläufen (44) zur Bestimmung der Differenz bestimmt (48) werden, wobei die Durchläufe (44) mit einer vordefinierten Frequenz wiederholt oder jedes Mal beim Empfangen einer Mitteilung (32) über einen aktualisierten Datensatz durchlaufen werden.

9. Verfahren nach Anspruch 8, wobei in jedem Durchlauf (44) zur Bestimmung der Differenz die Zeitdauer angepasst wird, wobei die Differenz nach dem Bestimmen mit einem oberen und einem unteren Schwellenwert verglichen (50, 54) wird, und beim Erreichen oder Überschreiten des oberen Schwellenwerts, das Zeitintervall um eine vordefinierte Schrittweite verlängert (58) und beim Erreichen oder Unterschreiten des unteren Schwellenwerts, das Zeitintervall um eine vordefinierte Schrittweite verkürzt (52) wird.

10. Verfahren nach Anspruch 9, wobei in jedem Durchlauf (44) zur Bestimmung der Differenz geprüft (56) wird, ob das Zeitintervall einem vordefinierten maximalen Zeitintervall entspricht oder dieses maximale Zeitintervall überschreitet, und im Falle des Erreichens oder Überschreitens eine Warnmeldung ausgegeben (60) wird.

11. Leitzentrale (14) zum Empfangen von Datensätzen mehrerer Windenergieanlagen (100) und/oder mehrerer Windparks (112), wobei die Leitzentrale (14) eingerichtet ist zum:
- Empfangen einer Mitteilung (32) über einen aktualisierten Datensatz von einer der Windenergieanlagen (100) oder einem der Windparks (112),
- Entscheiden, ob der aktualisierte Datensatz angefordert werden soll, und im Falle, dass der aktualisierte Datensatz angefordert werden soll:
- Absenden (35) einer Anforderung (34) des aktualisierten Datensatzes der Windenergieanlage (100) oder des Windparks (112),
- Empfangen einer Antwort (38) mit dem aktualisierten Datensatz von der Windenergieanlage (100) oder dem Windpark (112),
wobei die Leitzentrale (14) zur Entscheidung, ob der aktualisierte Datensatz angefordert werden soll, eingerichtet ist, zu prüfen, ob ein der Windenergieanlage (100) oder dem Windpark (112) zugeordnetes Zeitintervall seit dem letzten Empfangen einer Anforderung (34) oder Empfangen (40) der letzten Antwort (38) mit dem letzten Datensatz abgelaufen ist,
wobei die Leitzentrale (14) eingerichtet ist,
- im Falle, dass das Zeitintervall abgelaufen ist, die Anforderung (34) zum Anfordern des aktualisierten Datensatzes abzusenden und
- im Falle, dass das Zeitintervall noch nicht abgelaufen ist, die Mitteilung (32) über einen aktualisierten Datensatz zu ignorieren.

12. System mit mehreren Windenergieanlagen (100) oder mehreren Windparks (112) und einer einzelnen Leitzentrale (14) nach Anspruch 11 zum Durchführen des Verfahrens nach einem der Ansprüche 1 bis 10.

## Claims

1. Method for transmitting data records of a plurality of wind turbines (100) and/or a plurality of windfarms (112) to a control centre (14), wherein the method comprises the following steps:
- despatching (31) a notification (32) of an updated data record from one of the wind turbines (100) or windfarms (112) to the control centre (14),
- deciding by the control centre (14) whether the updated data record is to be requested and, if the updated data record is to be requested:
- despatching (35) a request (34) for the updated data record of the wind turbine (100) or windfarm (112) from the control centre (14),
- receiving (36) the request (34) from the wind turbine (100) or windfarm (112), and
- despatching (39) a response (38) with the updated data record from the wind turbine (100) or windfarm (112) to the control centre (14),
wherein, so that the control centre (14) can decide whether the updated data record is to be requested, a check is carried out to establish whether a time interval assigned to the wind turbine (100) or windfarm (112) has elapsed since the last despatch (35) of a request (34) or reception (40) of the last reply (38) with the last data record, wherein
- if the time interval has elapsed, the request (34) for the updated data record is despatched, and
- if the time interval has not yet elapsed, the notification (32) of an updated data record is ignored.

2. Method according to Claim 1, wherein a time interval is assigned to each wind turbine (100) and/or each windfarm (112) which is connectable to the control centre (14) by means of a connection (16), wherein the time interval is variable.

3. Method according to Claim 1 or 2, wherein the duration of each time interval is automatically adjusted by the control centre (14) or the time interval is manually adjusted.

4. Method according to Claim 3, wherein the time interval of a wind turbine (100) or windfarm (112) in a default condition (42) comprises a default duration and the time interval is shortened or adjusted (46) to a predefined minimum value, i.e. a minimum time period, by a user by requesting (43) at least one data record from the wind turbine (100) or windfarm (112).

5. Method according to one of the preceding Claims, wherein the despatch (31) of a notification (32) of an updated data record and the despatch (39) of a reply (38) are performed by means of a computer (10) assigned in each case to a wind turbine (100) or in each case to a windfarm (112), in particular a computer of a Supervisory Control and Data Acquisition System, i.e. a SCADA systems.

6. Method according to Claim 5, wherein the computer (10) serially processes incoming requests and cycles are executed in the control centre (14) in order to determine the round-trip delay or signal transit time, wherein the cycles are repeated with a predefined frequency and the round-trip delay or signal transit time between the control centre (14) and the computer (10) is determined by the control centre (14) in each cycle, in that:
- a predefined data packet is sent to determine the round-trip delay or signal transit time from the control centre (14) to one of the computers (10), wherein
- the computer (10) processes the data packet after previously received data packets have been processed and the computer (10) despatches a reply to the control centre (14) during or after the processing,
- the control centre (14) determines the time period between the despatch of the data packet and the reception of the reply, and
- the duration of the time interval is adjusted, i.e. left unchanged, shortened or lengthened, in each cycle depending on the measured time duration.

7. Method according to one of the preceding claims, wherein, in order to adjust the time interval which is assigned to a wind turbine (100) or windfarm (112), the control centre (14) determines (48) the difference between the despatched requests (34) and the number of received replies (38) and therefore the number of replies not yet received, and the time interval is adjusted, i.e. left unchanged, shortened or lengthened, depending on this difference.

8. Method according to Claim 7, wherein the difference is determined (48) in each case in cycles (44) for determining the difference, wherein the cycles (44) are repeated with a predefined frequency or are executed whenever a notification (32) of an updated data record is received.

9. Method according to Claim 8, wherein the time duration is adjusted in each cycle (44) for determining the difference, wherein, following the determination, the difference is compared (50, 54) with an upper and a lower threshold value, and, if the upper threshold value is reached or exceeded, the time interval is lengthened (58) by a predefined step width, and, if the lower threshold value is reached or understepped, the time interval is shortened (52) by a predefined step width.

10. Method according to Claim 9, wherein a check is carried out (56) in each cycle (44) for determining the difference in order to establish whether the time interval corresponds to a predefined maximum time interval or exceeds this maximum time interval, and, if said maximum time interval is reached or exceeded, a warning signal is emitted (60).

11. Control centre (14) for receiving data records of a plurality of wind turbines (100) and/or a plurality of windfarms (112), wherein the control centre (14) is arranged for:
- receiving a notification (32) of an updated data record from one of the wind turbines (100) or windfarms (112) to the control centre (14),
- deciding whether the updated data record is to be requested and, if the updated data record is to be requested:
- despatching (35) a request (34) for the updated data record of the wind turbine (100)or windfarm (112),
- receiving a response (38) with the updated data record from the wind turbine (100) or windfarm (112),
wherein the control centre (14) is arranged, for deciding whether the updated data record is to be requested, to carry out a check to establish whether a time interval assigned to the wind turbine (100) or windfarm (112) has elapsed since the last reception of a request (34) or reception (40) of the last reply (38) with the last data record, wherein
the control centre (14) is arranged for,
- if the time interval has elapsed, despatching the request (34) for the updated data record, and
- if the time interval has not yet elapsed, ignoring the notification (32) of an updated data record.

12. System with a plurality of wind turbines (100) or a plurality of windfarms (112) and a single control centre (14) according to claim 11 arranged for carrying out the method according to any of Claims 1 to 10.

## Revendications

1. Procédé de transmission de jeux de données de plusieurs éoliennes (100) et/ou de plusieurs parcs éoliens (112) à un centre de commande (14), dans lequel le procédé comprend les étapes suivantes :
- envoi (31) d'une notification (32) relative à un jeu de données actualisé d'une des éoliennes (100) ou d'un des parcs éoliens (112) au centre de commande (14),
- décision par le centre de commande (14) si le jeu de données actualisé doit être demandé et dans le cas où le jeu de données actualisé doit être demandé :
- envoi (35) d'une demande (34) du jeu de données actualisé de l'éolienne (100) ou du parc éolien (112) par le centre de commande (14),
- réception (36) de la demande (34) de l'éolienne (100) ou du parc éolien (112) et
- envoi (39) d'une réponse (38) avec le jeu de données actuel de l'éolienne (100) ou du parc éolien (112) au centre de commande (14),
dans lequel pour la décision du centre de commande (14) de si le jeu de données actualisé doit être demandé, il est vérifié si un intervalle de temps associé à l'éolienne (100) ou au parc éolien (112) s'est écoulé depuis le dernier envoi (35) d'une demande (34) ou réception (40) de la dernière réponse (38) avec le dernier jeu de données, dans lequel
- dans le cas où l'intervalle de temps s'est écoulé, la demande (34) pour demander le jeu de données actualisé est envoyée et
- dans le cas où l'intervalle de temps ne s'est pas encore écoulé, la notification (32) relative à un jeu de données actualisé est ignorée.

2. Procédé selon la revendication 1, dans lequel un intervalle de temps est associé à chaque éolienne (100) et/ou à chaque parc éolien (112), qui peut être relié au centre de commande (14) au moyen d'une liaison (16), dans lequel l'intervalle de temps est variable.

3. Procédé selon la revendication 1 ou 2, dans lequel une adaptation de la durée de chaque intervalle de temps est réalisée automatiquement par le centre de commande (14) ou l'intervalle de temps est adapté manuellement.

4. Procédé selon la revendication 3, dans lequel l'intervalle de temps d'une éolienne (100) ou d'un parc éolien (112) comprend une durée standard dans un état standard (42) et l'intervalle de temps est raccourci par un utilisateur par demande (43) d'au moins un jeu de données de l'éolienne (100) ou du parc éolien (112) ou est adapté (46) à une valeur minimal prédéfinie, donc une durée de temps minimal.

5. Procédé selon l'une quelconque des revendications précédentes, dans lequel l'envoi (31) d'une notification (32) relative à un jeu de données actualisé et l'envoi (39) d'une réponse (38) sont réalisés au moyen d'un ordinateur (10) associé respectivement à une éolienne (100) ou respectivement à un parc éolien (112), en particulier d'un ordinateur d'un système Supervisory Control and Data Acquisition, à savoir d'un système SCADA.

6. Procédé selon la revendication 5, dans lequel l'ordinateur (10) traite les demandes entrantes en série et des exécutions pour la détermination du temps de circulation ou du temps de propagation du signal sont menées dans le centre de commande (14), dans lequel les exécutions sont répétées avec une fréquence prédéfinie et le temps de circulation ou temps de propagation du signal entre le centre de commande (14) et l'ordinateur (10) est déterminé par le centre de commande (14) à chaque exécution, par le fait que :
- un paquet de données prédéfini est envoyé du centre de commande (14) à un des ordinateurs (10) pour la détermination du temps de circulation ou temps de propagation du signal, dans lequel
- l'ordinateur (10) traite le paquet de données, après que des paquets de données reçus auparavant ont été traités et l'ordinateur (10) envoie une réponse au centre de commande (14) pendant ou après le traitement,
- le centre de commande (14) détermine la durée de temps entre l'envoi du paquet de données et la réception de la réponse et
- la durée de l'intervalle de temps est adaptée, donc laissée inchangée, raccourcie ou prolongée, en fonction de la durée de temps mesurée à chaque exécution.

7. Procédé selon l'une quelconque des revendications précédentes, dans lequel le centre de commande (14) détermine (48) pour l'adaptation de l'intervalle de temps, qui est associé à une éolienne (100) ou à un parc éolien (112), la différence des demandes envoyées (34) et le nombre de réponses reçues (38) et ainsi aussi le nombre des réponses non encore reçues, et en fonction de cette différence, l'intervalle de temps est adapté, donc laissé inchangé, raccourci ou prolongé.

8. Procédé selon la revendication 7, dans lequel la différence est déterminée (48) respectivement à des exécutions (44) pour la détermination de la différence, dans lequel les exécutions (44) sont répétées avec une fréquence prédéfinie ou effectués chaque fois lors de la réception d'une notification (32) relative à un jeu de données actualisé.

9. Procédé selon la revendication 8, dans lequel la durée de temps est adaptée à chaque exécution (44) pour la détermination de la différence, dans lequel, après la détermination, la différence est comparée avec une valeur seuil supérieure et une inférieure (50, 54), et, lorsque la valeur seuil supérieure est atteinte ou dépassée, l'intervalle de temps est prolongé (58) d'une largeur de pas prédéfinie et, lorsque la valeur seuil inférieure est atteinte ou sous-dépassée, l'intervalle de temps est raccourci (52) d'une largeur de pas prédéfinie.

10. Procédé selon la revendication 9, dans lequel il est vérifié (56) à chaque exécution (44) pour la détermination de la différence, si l'intervalle de temps correspond à un intervalle de temps maximal prédéfini ou dépasse cet intervalle de temps maximal, et, dans le cas où il l'atteint ou le dépasse, un avertissement est émis (60).

11. Centre de commande (14) pour la réception de jeux de données de plusieurs éoliennes (100) et/ou de plusieurs parcs éoliens (112), dans lequel le centre de commande (14) est aménagé pour :
- recevoir une notification (32) relative à un jeu de données actualisé d'une des éoliennes (100) ou d'un des parcs éoliens (112),
- décider si le jeu de données actualisé doit être demandé, et, dans le cas où le jeu de données actualisé doit être demandé :
- envoyer (35) une demande (34) du jeu de données actualisé de l'éolienne (100) ou du parc éolien (112),
- recevoir une réponse (38) avec le jeu de données actualisé de l'éolienne (100) ou du parc éolien (112),
dans lequel le centre de commande (14), pour la décision de si le jeu de données actualisé doit être demandé, est aménagé pour vérifier si un intervalle de temps associé à l'éolienne (100) ou au parc éolien (112) s'est écoulé depuis la dernière réception d'une demande (34) ou réception (40) de la dernière réponse (38) avec le dernier jeu de données,
dans lequel le centre de commande (14) est aménagé
- dans le cas où l'intervalle de temps s'est écoulé, pour envoyer la demande (34) pour demander le jeu de données actualisé et
- dans le cas où l'intervalle de temps ne s'est pas encore écoulé, pour ignorer la notification (32) relative à un jeu de données actualisé.

12. Système avec plusieurs éoliennes (100) ou plusieurs parcs éoliens (112) et un centre de commande individuel (14) selon la revendication 11 pour la mise en oeuvre du procédé selon l'une quelconque des revendications 1 à 10.
